Europäisches Patentamt

European Patent Office

Office européen des brevets

(11) Publication number: **0 629 657 A2**

# EUROPEAN PATENT APPLICATION

(21) Application number: **94109053.2**

(22) Date of filing: **13.06.94**

(51) Int. Cl.⁵: **C08K 5/25**, C08L 33/06

(30) Priority: **14.06.93 JP 141776/93**

(43) Date of publication of application:
**21.12.94 Bulletin 94/51**

(84) Designated Contracting States:
**DE FR GB IT**

(71) Applicant: **Ajinomoto Co., Inc.
No. 15-1, Kyobashi 1-chome
Chuo-ku
Tokyo (JP)**

(72) Inventor: **Kayanuma, Kimie, c/o Central
Research Lab.
Ajinomoto Co., Inc.,
No. 1-1 Suzuki-cho
Kawasaki-ku, Kawasaki-shi, Kanagawa-ken
(JP)**
Inventor: **Hirai, Kiyomiki, c/o Central Research
Lab.
Ajinomoto Co., Inc.,
No. 1-1 Suzuki-cho
Kawasaki-ku, Kawasaki-shi, Kanagawa-ken
(JP)**

(74) Representative: **Strehl Schübel-Hopf Groening
& Partner
Maximilianstrasse 54
D-80538 München (DE)**

(54) **Crosslinkable resin composition in aqueous dispersion form.**

(57) A crosslinkable resin composition in aqueous dispersion form which gives rise to a fast-drying good coating film comprises
  (A) an aqueous emulsion of an acrylic copolymer containing ketone of aldehyde groups and
  (B) a water-soluble polyhydrazide having a solubility of 20 g or above per 100 g of water at 25°C.
  The composition is suitable for use as a clear coating material, top coating material, undercoating material, adhesive, and impregnant for cloth and paper, because of its ability to form a uniform coating film in a short time.

EP 0 629 657 A2

**Field of industrial application**

The present invention relates to a resin composition in aqueous dispersion form which is useful as an adhesive, coating material, and paint especially for water-permeable substrates such as concrete, woven cloth, wood, and paper.

**Prior art**

The recent trend in the fields of adhesive, coating material, and paint is towards the replacement of solvent-based products by aqueous ones from the view point of material saving, occupational safety, environmental protection, and hazard prevention. For example, an aqueous emulsion paint is attracting considerable attention in the field of paint. However, it has the disadvantage of giving rise to weaker coating films than a solvent-based paint because its film formation is due to coalescence of particles. A possible way of eliminating this disadvantage is by incorporating an acrylic emulsion containing ketone or aldehyde groups with a polyhydrazide, thereby forming a crosslinked coating film. Such crosslinkable resin compositions in aqueous emulsion form are disclosed in Japanese laid-open Patent applications Nos. 110248/1979, 144432/1979, 147562/1980, 3857/1982, 38468/1985, 72742/1987, 138376/1990, 175742/1990, and 249587/1992. A polyhydrazide contained in them brings about crosslinking at ordinary temperature; however, it needs heating for crosslinking if the acrylic emulsion contains carboxyl groups in place of ketone or aldehyde groups. Such systems as mentioned above, in which the polyhydrazide is usually adipodihydrazide or succinodihydrazide, suffer from the following disadvantages in practical use. (a) They do not form a uniform coating film with good adhesion. (b) They have to be in the form of dilute aqueous solution because the polyhydrazide is not readily soluble in water at normal temperature, and hence they need a long time before they form a coating film.

**Problems to be solved by the invention**

It is an object of the present invention to provide a crosslinkable resin composition in the form of an aqueous dispersion which, unlike the conventional ones, gives rise to fast drying and good coating film.

**Means to solve the problems**

In order to cope with the aforesaid problems involved in the conventional crosslinkable resin composition in aqueous dispersion form, the present inventors carried out a series of researches which led to the finding that the problems are solved if a specific water-soluble polyhydrazide is used which has a solubility of 20 g or more per 100 g of water at 25°C. Subject matter of the present invention is a crosslinkable resin composition in the form of an aqueous dispersion which comprises (A) an aqueous emulsion of an acrylic copolymer containing ketone or aldehyde groups and (B) a water-soluble polyhydrazide having a solubility of 20 g or above per 100 g of water at 25°C.

Component (A) used in the present invention is prepared from at least (a) a monomer capable of radical polymerization, (b) an unsaturated compound having a ketone or aldehyde group, and (c) an unsaturated carboxylic acid by emulsion polymerization in an aqueous dispersion. Suitable copolymers are disclosed in Japanese laid-open Patent Applications Nos. 110248/1979, 144432/1979, 147562/1980, 3857/1982, and 72742/1987.

Examples of monomer (a) include acrylic esters such as methyl acrylate and ethyl acrylate, methacrylic esters, aromatic vinyl compounds, aliphatic vinyl compounds, vinyl halogenide, acrylamide, and methacrylamide. Examples of monomer (b) include acrolein, diacetoneacrylamide, and vinyl methyl ketone, which are carbonyl group-containing compounds having in the molecule at least one aldehyde group or ketone group and one polymerizable double bond. Excluded therefrom are compounds which have an ester group (-COO-) or carboxyl group (-COOH) only. Examples of monomer (c) include acrylic acid, methacrylic acid, and maleic acid. These examples are not limitative.

The ratio of the monomer components (a) to (c) varies depending on the purpose. Two or more species of the monomer component (a) may be used in some cases.

The component (A) in the present invention is an aqueous emulsion which has a particle size of 0.01 to 3 $\mu$m and forms a film at 60°C or below, preferably at -40°C to +30°C.

The component (B) is a water-soluble polyhydrazide having a solubility of 20 g or more in 100 g of water and also having in the molecule at least two -NH•NH$_2$ groups to yield a crosslinked product through crosslinking with the component (A). It includes, for example, 1,3-bis-(hydrazinocarboethyl)-5-isopropylhydantoin, 1,3-bis-(hydrazinocarboethyl)-5-(2-methylmercaptoethyl)hydantoin, 1-hydrazinocarboethyl-3-hydrazinocarboisopropyl-5-(2-methylmercaptoethyl)hydantoin, thiodipropiodihydrazide, oxydipropiodihydrazide, oxydiglycoldihydrazide, and N,N'-dihydrazinocarboethylpiperazine. Of these examples, the first one is desirable because of its high solubility in water and its ability to yield a good uniform film with less discoloration.

The component (B) is a water-soluble polyhydrazide as a crosslinking agent. It is used in such an amount that the composition comprises 0.02-5 mol, preferably 0.1-2 mol, of -NH•NH$_2$ groups per mol of ketone group and aldehyde group in total in the component (A).

The composition of the present invention may be incorporated with an antifoam agent, film-forming auxiliary agent, plasticizer, thickener, dye, pigment, filler, antifreeze agent, etc., and other usual additives. The aqueous emulsion of the present invention may be further incorporated with a water-soluble copolymer (as a water retainer capable of crosslinking at ordinary temperature), an aqueous emulsion of a polyurethane-acrylic resin (capable of crosslinking at ordinary temperature), and any other aqueous emulsion having no adverse effect on crosslinking, as long as they are not harmful to the inherent performance.

The crosslinkable composition in aqueous dispersion form undergoes crosslinking on drying, thereby forming a coating film. In other words, it remains stable as long as water exists in the system. Therefore, it has good storage stability.

Examples

The invention will be described in more detail with reference to the following examples, in which parts and percent are based on weight unless otherwise stated.

Solubility of polyhydrazide

The following polyhydrazides were tested for solubility in water. The results are shown in Table 1.

- 1,3-bis(hydrazinocarboethyl)-5-isopropylhydantoin (VDH) "Amicure(Ajicure) VDH" from Ajinomoto Co., Inc.
- 1-hydrazionocarboethyl-3-hydrazinocarboisopropyl-5-(2-methylmercaptoethyl)hydantoin (MHYY')
- oxydipropiodihydrazide (OY$_2$)
- N,N'-dihydrazinocarboethylpiperazine (Pi(NY)$_2$)
- adipodihydrazide (ADH) from Nippon Hydrazine Kogyo Co., Ltd.
- isophthalodihydrazide (IDH) from Nippon Hydrazine Kogyo Co., Ltd.
- succinodihydrazide (SaADH) from Aldrich Chemical Co., Inc.
- oxalodihydrazide (ODH) from Aldrich Chemical Co., Inc.
- malonodihydrazide (MDH) from Nippon Hydrazine Kogyo Co., Ltd.

Table 1

|  | Polyhydrazide | Solubility (g/100 g water) |
|---|---|---|
| Examples | VDH | >100 |
|  | MHYY' | 25 |
|  | OY$_2$ | 25 |
|  | Pi(NY)$_2$ | 68 |
| Comparative Examples | ADH | 16 |
|  | IDH | <1 |
|  | SaADH | <1 |
|  | ODH | <1 |
|  | MDH | 17 |

3

Compounding of an emulsion with a crosslinking agent

In Examples 1 to 5, a crosslinkable resin composition in aqueous dispersion form was prepared from an emulsion of a carbonyl group-containing polyacrylate ("Celna WE-518" containing 50% solids, from Chukyo Yushi Co., Ltd.), any of VDH, 10% aq. solution of VDH, MHYY', $OY_2$, and $Pi(NY)_2$, and butyl cellosolve, according to the formulation shown in Table 2.

In Comparative Examples 1 to 6, a crosslinkable resin composition in aqueous dispersion form was prepared from "Celna WE-518" (mentioned above), any of ADH, 10% aq. solution of ADH, IDH, SaADH, ODH, and MDH, and butyl cellosolve, according to the formulation shown in Table 2. Incidentally, butyl cellosolve is a film-forming auxiliary to enhance the drying and wetting properties.

Evaluation of samples

In the case of curing at ordinary temperature: Each sample was applied to an aluminum plate using an applicator to form a coating film about 5 $\mu$m thick after drying. The coating film was allowed to stand for curing at ordinary temperature.

In the case of curing by heating: Each sample was applied to an aluminum plate using an applicator to form a coating film about 50 $\mu$m thick after drying. The coating film was heated for curing at 100°C for 15 minutes.

(Method of evaluation)

- External appearance: The coating film is visually inspected for surface state and rated as good if it is uniform and smooth and as poor if it is uneven and rough.
- Drying time (in the case of curing at ordinary temperature) : The time required for the film to become tack-free is measured with a stopwatch after film formation by an applicator.
- Crosscut test: 100 squares (each 1 mm square) are cut into the coating film, and a piece of cellophane tape is applied over the squares and then rapidly pulled off. The number of squares remaining unremoved is counted.

4

Table 2

| | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| Celna WE-518 | 100 | 100 | 100 | 100 | 100 | 100 | 100 | 100 | 100 | 100 | 100 |
| Amicure(Ajicure) VDH | 5.4 | | | | | | | | | | |
| 10% aq. soln. of VDH | | 54 | | | | | | | | | |
| MHYY' | | | 11 | | | | | | | | |
| OY$_2$ | | | | 5.7 | | | | | | | |
| Pi(NY)$_2$ | | | | | 7.8 | | | | | | |
| ADH | | | | | | 3.0 | | | | | |
| 10% aq. soln. of ADH | | | | | | | 30 | | | | |
| IDH | | | | | | | | 5.8 | | | |
| SaADH | | | | | | | | | 4.4 | | |
| ODH | | | | | | | | | | 3.5 | |
| MDH | | | | | | | | | | | 4.0 |
| Butyl cellosolve | 2.5 | 2.5 | 2.5 | 2.5 | 2.5 | 2.5 | 2.5 | 2.5 | 2.5 | 2.5 | 2.5 |
| Cured a ordinary temperature — Appearance | good | good | good | good | good | poor | poor | poor | poor | poor | poor |
| Cured a ordinary temperature — Tack-free time (min) | 1.0 | 4.0 | 2.0 | 3.0 | 1.0 | 1.0 | 4.0 | 1.5 | 3.0 | 3.0 | 3.3 |
| Cured a ordinary temperature — Cross-cut test | 100 | 100 | 100 | 100 | 100 | 91 | 35 | 80 | 0 | 0 | 10 |
| Cured at 100°C — Appearance | good | good | good | good | good | poor | poor | poor | poor | poor | poor |
| Cured at 100°C — Cross-cut test | 100 | 100 | 100 | 100 | 100 | 100 | 95 | 10 | 100 | 15 | 100 |

Effect of the invention

The present invention provides a crosslinkable resin composition in aqueous dispersion form which is suitable for use as a clear coating material, top coating material, undercoating material, adhesive, and impregnant for cloth and paper, because of its ability to form a uniform coating film in a short time. It remains stable during storage so long as it contains water. Being of aqueous system, it is more useful than solvent-based ones from the view point of heath, pollution, and hazard.

**Claims**

1. A crosslinkable resin composition in the form of an aqueous dispersion which comprises (A) an aqueous emulsion of an acrylic copolymer containing ketone or aldehyde groups and (B) a water-soluble polyhydrazide having a water solubility of 20 g or more per 100 g of water at 25°C.

2. A crosslinkable resin composition according to claim 1, wherein component (B) is 1,3-bis-(hydrazinocarboethyl)-5-isopropylhydantoin.

3. A crosslinkable resin composition according to claim 1 or claim 2, wherein the acrylic copolymer containing ketone or aldehyde groups is prepared from at least (a) a monomer capable of radical polymerisation, (b) an unsaturated compound having a ketone group and/or an aldehyde group and (c) and unsaturated carboxylic acid.

4. A crosslinkable resin composition according to claim 3, wherein the monomer (a) capable of radical polymerisation is an ester of acrylic acid or methacrylic acid, an aromatic or an aliphatic vinyl compound, a vinyl halogenide or acrylamide or methacrylamide.

5. The use of a crosslinkable resin composition according to any of the claims 1 to 4 for the production of a coating.

6. The use of a crosslinkable resin composition according to any of the claims 1 to 4 as an adhesive.

7. The use of a crosslinkable resin composition according to any of the claims 1 to 4 as an impregnant for a water-permeable substrate.

8. The use according to claim 7, wherein the water-permeable substrate is cloth or paper.